# EUROPÄISCHE PATENTANMELDUNG

(11) **EP 1 445 061 A2**
(43) Veröffentlichungstag der Anmeldung: **11.08.2004**
(21) Anmeldenummer: 03029254.4
(22) Anmeldetag: 16.12.2003
(51) Int. Cl.: B23Q 1/52, B23Q 5/36, B23Q 16/10

(54) **Rundschalttisch mit mehreren Antriebselementen**

(30) Priorität: 04.02.2003 DE 10304462
(71) Anmelder: Weiss GmbH, Sondermaschinentechnik, 74722 Buchen (Odw.) (DE)
(72) Erfinder: Weiss, Dieter, 74731 Walldürn (DE)
(74) Vertreter: Manitz, Finsterwald & Partner GbR

(57) **Zusammenfassung**

Die Erfindung betrifft einen Rundschalttisch mit einer stationären Basiseinheit (16) und einem darauf drehbar gelagerten, mittels eines Antriebs relativ zur Basiseinheit antreibbaren Teller (10), bei dem der Antrieb durch mehrere, im Umfangsbereich des Tellers angeordnete Einzelantriebselemente (1,2) gebildet ist.

## Beschreibung

Die Erfindung betrifft einen Rundschalttisch mit einer stationären Basiseinheit und einem darauf drehbar gelagerten, mittels eines Antriebs relativ zur Basiseinheit antreibbaren Teller.

Derartige Rundschalttische, wie sie aus dem Stand der Technik in unterschiedlichen Ausführungsformen bekannt sind, dienen beispielsweise dazu, mehrere, auf dem genannten Teller bzw. auf darauf angeordneten Aufbauten gehaltene Werkstücke jeweils durch eine Rotation des Tellers von einer Bearbeitungs- oder Montagestation zu einer nächsten Bearbeitungs- oder Montagestationen weiter zu transportieren.

Bekannte Rundschalttische mit Direktantrieb weisen üblicher Weise eine an einer geeigneten Stelle vorgesehene Antriebseinheit auf, welche beispielsweise aus einem Elektromotor bestehen kann, welcher insbesondere bei großen Tellerdurchmessern der Aufbauten erhebliche Drehmomente aufbringen muss. Hierzu ist es nötig, dass Motoren mit relativ hoher Stromaufnahme eingesetzt werden, welche zum einen ein relativ aufwändiges Kühlsystem, wie z.B. eine Wasserkühlung, benötigen und deren Anschaffung zum anderen mit einem nachteilig hohen wirtschaftlichen Aufwand verbunden ist.

Eine Aufgabe der Erfindung besteht darin, einen Rundschalttisch der eingangs genannten Art zu schaffen, welcher, insbesondere soweit seine Antriebseinheit betroffen ist, mit vergleichsweise geringem wirtschaftlichen Aufwand realisiert werden kann. Bevorzugt soll der Antrieb eine so geringe Stromaufnahme benötigen, dass eine kostengünstige Luftkühlung möglich wird.

Erfindungsgemäß wird diese Aufgabe dadurch gelöst, dass der Antrieb durch mehrere, im Umfangsbereich des Tellers angeordnete Einzelantriebselemente gebildet ist.

Durch diese überraschend einfache, bei bekannten Rundschalttischen bisher jedoch nicht eingesetzte Maßnahme wird erreicht, dass anstelle eines einzelnen, relativ starken Antriebselements mehrere Einzelantriebselemente zum Einsatz gelangen, die entsprechend schwächer ausgebildet werden können, und die dementsprechend auch eine geringere Stromaufnahme und daraus resultierend auch eine geringere Wärmeerzeugung bedingen. Diese Vorteile werden erfindungsgemäß auch dadurch erreicht, dass die Einzelantriebselemente nicht etwa im Bereich der Drehachse des Tellers sondern vielmehr in seinem Umfangsbereich angeordnet werden, so dass beim Betrieb des erfindungsgemäßen Rundschalttisches vergleichsweise geringe, im Bereich der Einzelantriebselemente erzeugte Tangentialkräfte große Drehmomente erzeugen. Dadurch können die Einzelantriebselemente klein gehalten werden, was dann - wie bereits erwähnt - zu einem vorteilhaft geringen Stromverbrauch und einer dementsprechend geringen Wärmeentwicklung führt.

Erfindungsgemäß können also mehrere kleinere, kostengünstige Einzelantriebselemente zum Einsatz gelangen, deren Gesamtanschaffungskosten unter den Anschaffungskosten eines einzigen, vergleichsweise großen Antriebselements für bisher bekannte Rundschalttische liegen. Ferner ist es gemäß der Erfindung aufgrund der geringen Wärmeentwicklung möglich, die Einzelantriebselemente lediglich mit einer kostengünstigen Luftkühlung zu beaufschlagen, so dass bisher nötige, aufwändige Kühlverfahren entfallen können.

Von Vorteil ist es, wenn die Einzelantriebselemente zumindest über einen Teil des Umfangs des Tellers gleichverteilt angeordnet werden, wobei sie sich insbesondere bezogen auf die Drehachse des Tellers jeweils im Wesentlichen diametral gegenüberliegen. Bei einer derartigen Anordnung werden die von den Einzelantriebselementen erzeugten Radialkräfte weitgehend durch das jeweils gegenüber liegende Einzelantriebselement aufgehoben, ohne dass die Lagerung des Rundschalttisches nennenswert belastet wird.

Die Einzelantriebselemente können beispielsweise als mit jeweils einem Zahnrad versehene Elektromotoren ausgebildet werden, wobei die Zahnräder in einen mit dem Teller verbundenen Zahnkranz eingreifen. In diesem Fall benötigt man jedoch mechanische Getriebeelemente, nämlich Zahnräder und Zahnkranz, weshalb es bevorzugt ist, wenn der Teller entlang seines gesamten Umfangs mit einander benachbarten, einzelnen Permanentmagneten versehen wird, welche mit an der Basiseinheit angebrachten Elektromagneten zusammenwirken, wobei diese Elektromagneten den mit dem Teller gekoppelten Permanentmagneten gegenüberliegen. Letztgenannte Ausführungsform der Einzelantriebselemente ist besonders kostengünstig zu realisieren und weist zudem den Vorteil auf, dass im Bereich der Einzelantriebselemente keine mechanische Verbindung zwischen Basiseinheit und Teller - und dementsprechend auch kein mechanisches Getriebeelement - vorgesehen werden muss, da die auf den Teller aufzubringenden Kräfte berührungslos als elektromagnetische Kräfte übertragen werden. Ein derartiger elektromagnetischer Antrieb arbeitet im Vergleich zu einem Zahnradantrieb weitgehend verschleißfrei, wodurch sich die Standzeit der Einzelantriebselemente auf vorteilhafte Weise wesentlich erhöhen lässt.

Die erfindungsgemäß vorgesehenen Einzelantriebselemente werden bevorzugt von einer Luftkühlung beaufschlagt, wobei zum Beispiel jeweils ein Luftkühlungselement für eine Hälfte der im Umfangsbereich des Tellers angeordneten Einzelantriebselemente vorgesehen werden kann. Konstruktionstechnisch von Vorteil ist es dabei, wenn die beiden Luftkühlungselemente benachbart zueinander vorgesehen werden und beiden Luftkühlungselementen entweder eine einzelne, gemeinsame Abluftöffnung oder jeweils eine eigene Abluftöffnung zugeordnet wird. Die Luftkühlungselemente und die Abluftöffnungen können dabei bezogen auf die Drehachse des Tellers im Wesentlichen einander diametral gegenüber liegend angeordnet werden, so dass sichergestellt ist, dass im wesentlichen der gesamte Umfangsbereich des Tellers gleichmäßig belüftet wird.

Um die jeweilige Position des Tellers relativ zur Basiseinheit ermitteln und eine entsprechende Information beispielsweise einem Steuerrechner mitteilen zu können, ist es von Vorteil, wenn ein Winkelgeber zur Ermittlung der Relativposition zwischen Teller und Basiseinheit vorgesehen wird. Ein solcher Winkelgeber kann zum Beispiel mit am Teller angebrachten, über seinen Umfang verteilten Codierungen arbeiten. Diese Codierungen können entweder untereinander gleich oder verschieden voneinander ausgebildet werden, wobei es bei untereinander gleichen Codierungen vorteilhaft ist, wenn zumindest eine Referenzmarke im Bereich der Codierungen vorgesehen wird, damit nicht nur Relativbewegungen zwischen Teller und Basiseinheit ermittelt werden können, sondern auch eine absolute Winkelstellung des Tellers ermittelbar ist. Um die genannten Codierungen bzw. Referenzmarken zu erfassen, wird die Basiseinheit mit einem optischen, magnetischen oder induktiven Sensor versehen.

Vorteilhaft ist es ferner, wenn die Basiseinheit eine mit dem Teller zusammenwirkende, insbesondere druckluftbeaufschlagte Bremseinheit aufweist, mittels welcher eine Drehbewegung des Tellers, insbesondere beim Auftreten einer Notsituation, kurzfristig und vollständig gebremst werden kann. Dabei ist es bevorzugt, wenn sich die Bremseinheit bei vorhandener Druckluftbeaufschlagung in ihrem eine Drehung des Tellers ermöglichenden Zustand befindet. In diesem Fall wird nämlich beispielsweise bei einem plötzlichen Druckluftverlust ein Bremsen des Tellers ausgelöst.

Teller und Basiseinheit können jeweils ringförmig ausgebildet werden, wobei die zentralen Öffnungen von Teller und Basiseinheit im Wesentlichen miteinander ausgerichtet sind. Dies ermöglicht, dass auf dem Teller angeordnete Werkstücke nicht nur ausgehend vom Umfangsbereich des Tellers, sondern auch ausgehend von den genannten Öffnungen bearbeitet werden können, da Bearbeitungsvorrichtungen sowohl im Umfangsbereich des Tellers als auch im Bereich der genannten Öffnungen vorgesehen werden können.

Schließlich ist es bevorzugt, wenn der Teller unabhängig davon, ob er kreisförmig oder kreisringförmig ausgebildet ist, über ein Draht-Vierpunkt-Lager drehbar auf der Basiseinheit gelagert ist. Eine derartige Lagerung ist besonders gut dazu geeignet, Radial-, Tangential- und Vertikalkräfte zwischen Teller und Basiseinheit zu übertragen.

Weitere bevorzugte Ausführungsformen der Erfindung sind in den Unteransprüchen beschrieben.

Die Erfindung wird nachfolgend anhand eines Ausführungsbeispiels unter Bezugnahme auf die Zeichnungen erläutert; in diesen zeigen:
- Fig. 1: eine dreidimensionale Ansicht einer möglichen Ausführungsform eines erfindungsgemäßen Rundschalttisches, bei welchem der Teller bereichsweise weggelassen wurde, um das Innere des Rundschalttisches sichtbar zu machen, und
- Fig. 2: einen Schnitt durch einen Rundschalttisch gemäß Fig. 1, und
- Fig. 3: eine dreidimensionale Ansicht eines Bereichs eines den Teller tragenden Ringelements mit daran angeordneten Einzelantriebselementen.

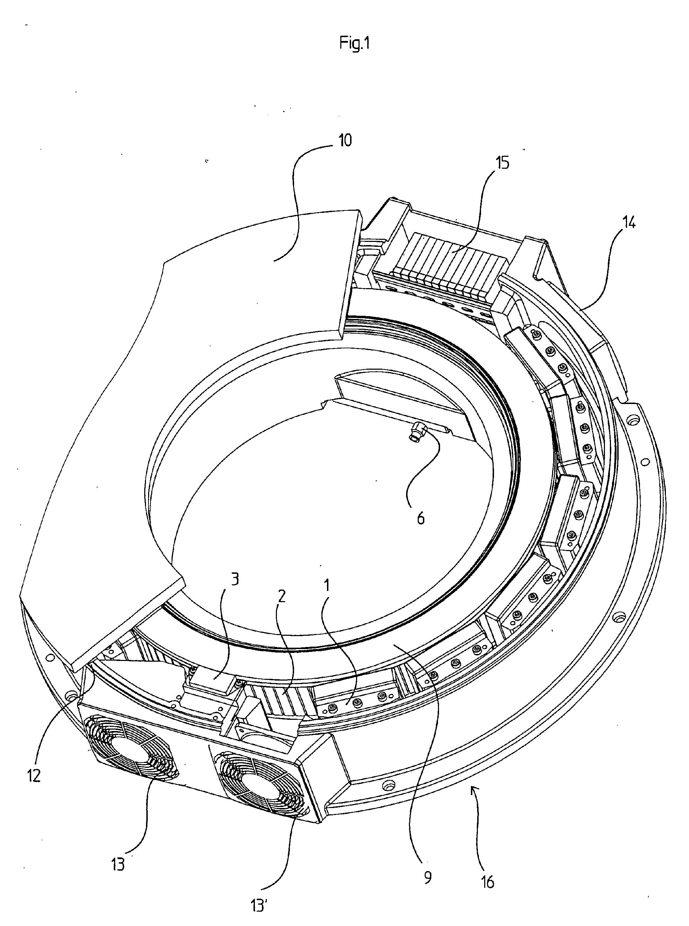

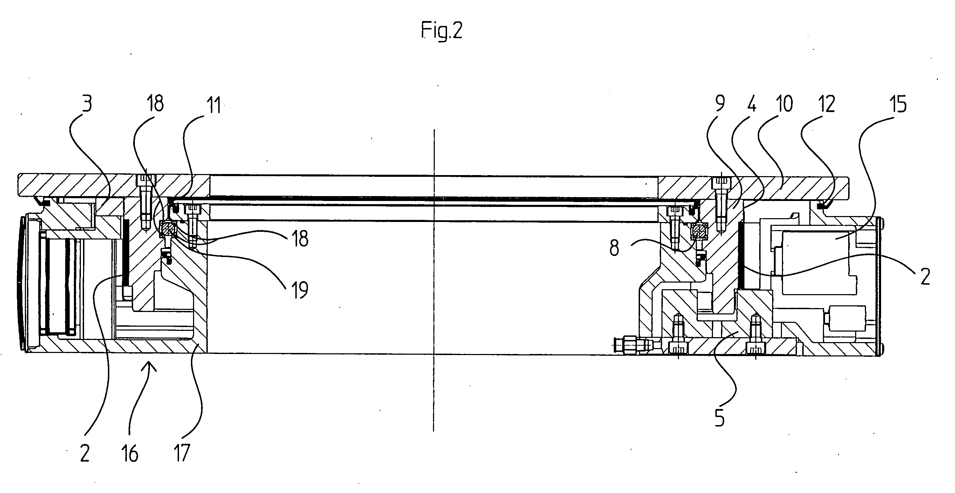

Fig. 1 zeigt einen Rundschalttisch mit einem kreisringförmig ausgebildeten, in Fig. 1 lediglich bereichsweise dargestellten Teller 10, welcher starr mit einem Ringelement 9 verbunden ist, wobei sich das Ringelement 9 vollständig unterhalb des Tellers 10 befindet. Entsprechendes ist aus Fig. 2 ersichtlich, welche einen Schnitt durch eine Anordnung gemäß Fig. 1 zeigt, wobei im Folgenden auf die Fig. 1 und 2 gemeinsam Bezug genommen wird.

Das Ringelement 9 mit dem Teller 10 ist auf einer Basiseinheit 16 drehbar gelagert, wobei die Basiseinheit 16 u.a. ein ringförmiges Trägerprofil 17 (Fig. 2) aufweist, an welchem die weiteren Elemente der Basiseinheit 16 befestigt sind. Die zentrale Öffnung des Trägerprofils 17 ist in etwa so groß wie die zentrale Öffnung des Tellers 10.

Zwischen Trägerprofil 17 und Ring 9 ist ein Draht-Vierpunkt-Lager 8 ausgebildet, welches aus vier kreisförmig und parallel zueinander verlaufenden Drähten 18 besteht, die derart angeordnet sind, dass sie einen Käfig für innerhalb dieser Drähte 18 angeordnete Kugeln 19 bilden. Derartige Draht-Vierpunkt-Lager 8 sind besonders gut dazu geeignet, sowohl vertikal, also parallel zur Drehachse des Tellers 10, als auch radial zum Teller 10 wirkende Kräfte zwischen Ringelement 9 und Trägerprofil 17 zu übertragen.

Die Dimensionen des in den Fig. 1 und 2 dargestellten Rundschalttisches sind derart gewählt, dass der Durchmesser der zentralen Öffnung von Teller 10 und Trägerprofil 17 in etwa halb so groß ist wie der Gesamtdurchmesser des dargestellten Rundschalttisches. Die vertikale Erstreckung des Rundschalttisches beträgt etwas weniger als ein Viertel dessen Durchmessers. Bei anderen Ausführungsformen des erfindungsgemäßen Rundschalttisches sind jedoch je nach Anwendungsfall beliebige andere Größenverhältnisse realisierbar.

Zwischen Teller 10 und Basiseinheit 16 sind Dichtungen 11, 12 ausgebildet, die ein Eindringen von Verunreinigungen in das Innere des Rundschalttisches und ein Austreten von Schmierstoffen aus dem Lager 8 verhindern.

Im Umfangsbereich des Ringelements 9 sind gleich verteilt einander benachbarte, einzelne Permanentmagneten 2 vorgesehen, welche jeweils stabförmig ausgebildet sind und sich parallel zur Drehachse des Tellers 10 erstrecken. Außerhalb des Ringelements 9 sind den Permanentmagneten 2 gegenüberliegend mehrere, beispielsweise zwölf Elektromagneten 1 vorgesehen, von denen in Fig. 1 insgesamt sechs Stück dargestellt sind. Die Elektromagneten 1 sind in zwei Antriebsbereichen des Außenumfangs des Ringelements 9 im Wesentlichen gleich verteilt angeordnet, wobei sich die beiden genannten Antriebsbereiche jeweils über etwas weniger als 180°, jedoch über deutlich mehr als 90° des Umfangs des Ringelements 9 erstrecken. Dabei sind die Elektromagneten 1 fest mit der Basiseinheit 16 verbunden und derart angeordnet, dass sie mit den stabförmigen Permanentmagneten 2, welche am drehbaren Ringelement 9 befestigt sind, zusammenwirken können. Bei anderen, größeren Ausführungsformen der Erfindung ist es ohne weiteres möglich, zwanzig und mehr Elektromagneten 1 vorzusehen.

Oberhalb der Permanentmagneten 2 ist das Ringelement 9 mit einander benachbart angeordneten Codierungen 4 (Fig. 2) versehen, welche bei einer Drehung des Tellers 10 bzw. des Ringelements 9 an einem Messkopf 3 vorbeilaufen, welcher fest mit der Basiseinheit 16 verbunden ist. Der Messkopf 3 kann als optischer, magnetischer oder induktiver Sensor ausgeführt werden. Da die Codierungen 4 u.a. auch zumindest eine Referenzmarke umfassen, kann über den Messkopf 3 die jeweilige Position des Tellers 10 absolut ermittelt werden.

Der Messkopf 3 ist ebenso wie zwei ihm benachbarte Lüfter 13, 13' in einem Umfangsbereich des Trägerprofils 17 vorgesehen, in welchem keine Elektromagneten 1 angeordnet sind. Die beiden Lüfter 13, 13' sind jeweils ungefähr einem Halbringraum des in den Fig. 1 und 2 dargestellten Rundschalttisches zugeordnet, so dass jeder Lüfter 13, 13' insgesamt jeweils sechs Elektromagneten 1 eines der vorstehend genannten Antriebsbereiche belüftet.

Gegenüber den Lüftern 13, 13' und dem Messkopf 3 ist ein weiterer Umfangsbereich des Trägerprofils 17 vorgesehen, in welchem keine Elektromagneten 1 vorhanden sind. In diesem Bereich ist eine Energiezuführung 15 vorgesehen, über welche die Elektromagneten 1 mit Energie versorgt werden können. Beidseits der Energiezuführung 15 ist jeweils eine Abluftöffnung 14 vorgesehen, welche jeweils zum Abtransport der von einem Lüfter 13, 13' angesaugten Luft geeignet ist. In Fig. 1 ist aufgrund des nur teilweise nicht dargestellten Tellers 10 lediglich eine dieser beiden Abluftöffnungen 14 zu sehen.

In demjenigen Bereich des Rundschalttisches, in welchem die Energiezuführung 15 vorgesehen ist, befindet sich weiterhin ein Druckluftanschluss 6 (Fig. 1), über welchen Druckluft einer Bremseinheit 5 zugeführt werden kann, welche im Bereich der Energiezuführung 15 dem Ringelement 9 zugeordnet ist. Bei Beaufschlagung mit Druckluft gibt die Bremseinheit 5 das Ringelement 9 frei, so dass dieses sich gegenüber der Basiseinheit 16 frei verdrehen kann. Bei einem Druckluftabfall wird das Ringelement 9 von Bremsbacken der Bremseinheit 5 gebremst.

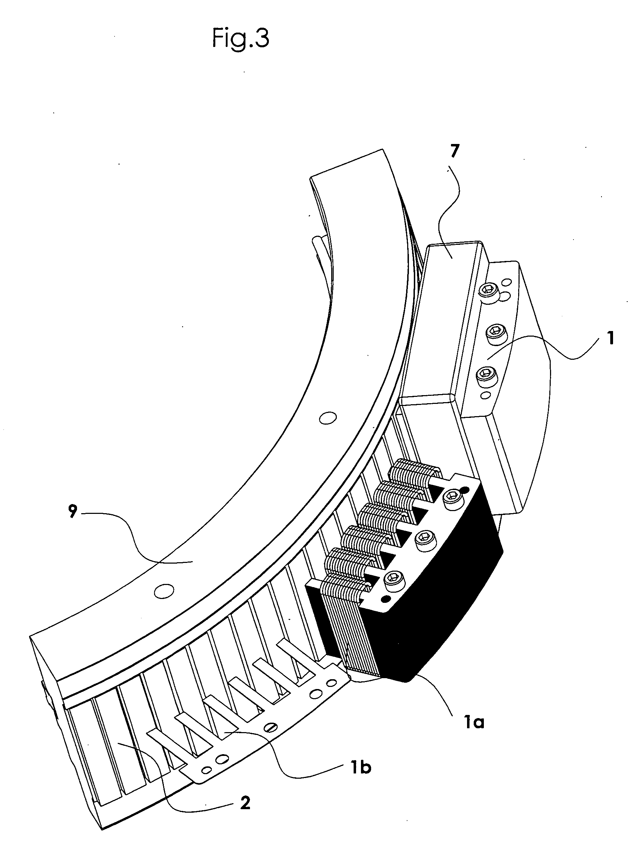

Fig. 3 zeigt einen Abschnitt des Ringelements 9 mit daran angeordneten Permanentmagneten 2. Gegenüber den Permanentmagneten 2 ist eine Mehrzahl von Motorblechen 1b vorgesehen, welche jeweils auf nicht dargestellte Weise mit der Basiseinheit 16 verbunden sind. Auf diesen Motorblechen 1b ist jeweils ein Elektromagnet 1 mit einer Motorwicklung 1a befestigt. Zur besseren Veranschaulich dieses Aufbaus ist in Fig. 3 ein Motorblech 1b ohne daran befestigtem Elektromagnet 1 sowie ein Elektromagnet 1 mit und ein Elektromagnet 1 ohne Gehäuse 7 gezeigt.

Bei einem Betrieb des in den Fig. 1 bis 3 dargestellten Rundschalttisches werden sämtliche Elektromagneten 1 über die Energiezuführung 15 derart mit Strom beaufschlagt, dass aufgrund der elektromagnetischen Kräfte zwischen Elektromagneten 1 und Permanentmagneten 2 eine Drehung des Ringelements 9 bzw. des Tellers 10 gegenüber der Basiseinheit 16 ausgelöst wird. Der jeweils gewünschte Winkelschritt kann dabei über den Messkopf 3 bestimmt werden, beispielsweise indem eine Beaufschlagung der Elektromagneten 1 von einer nicht dargestellten Steuereinheit unterbrochen wird, sobald der gewünschte und vom Messkopf 3 ermittelte Winkelschritt vollzogen wurde.

Durch die erfindungsgemäße Vorsehung einer Mehrzahl von Elektromagneten müssen diese - einzeln betrachtet - nur relativ geringe Kräfte aufbringen, da alle Elektromagneten 1 bei einer Verdrehung des Tellers 10 zusammenwirken und sich die durch sie erzeugten Kräfte dementsprechend addieren. Dies führt dazu, dass relativ kostengünstige Elektromagneten eingesetzt werden können, die auch nur eine vergleichsweise geringe Hitzeentwicklung aufweisen, so dass die in den Fig. 1 und 2 dargestellte Luftkühlung für einen Betrieb des erfindungsgemäßen Rundschalttisches ausreichend ist.

Sofern ein Rundschalttisch benötigt wird, bei welchem der Teller 10 gegenüber der Basiseinheit 16 mit geringeren Kräften verdrehbar ist, können ohne weiteres einige der dargestellten Elektromagneten 1 weggelassen werden. Beispielsweise wäre es möglich, lediglich jeden zweiten der in Fig. 1 dargestellten Elektromagneten 1 vorzusehen. Im Extremfall werden lediglich zwei Elektromagneten 1 mit der Basiseinheit 16 gekoppelt.

### Bezugszeichenliste

- 1: Elektromagnet
- 1a: Motorwicklung
- 1b: Motorblech
- 2: Permanentmagnet
- 3: Messkopf
- 4: Codierungen
- 5: Bremseinheit
- 6: Druckluftanordnung
- 7: Gehäuse
- 8: Lager
- 9: Ringelement
- 10: Teller
- 11: Dichtung
- 12: Dichtung
- 13: Lüfter
- 13': Lüfter
- 14: Abluftöffnung
- 15: Energiezuführung
- 16: Basiseinheit
- 17: Trägerprofil
- 18: Drähte
- 19: Kugeln

## Patentansprüche

1. Rundschalttisch mit einer stationären Basiseinheit (16) und einem darauf drehbar gelagerten, mittels eines Antriebs relativ zur Basiseinheit (16) antreibbaren Teller (10),
**dadurch gekennzeichnet,**
**dass** der Antrieb durch mehrere, im Umfangsbereich des Tellers (10) angeordnete Einzelantriebselemente (1, 2) gebildet ist.

2. Rundschalttisch nach Anspruch 1,
**dadurch gekennzeichnet,**
**dass** die Einzelantriebselemente (1, 2) zumindest über einen Teil des Umfangs des Tellers (10) gleichverteilt sind.

3. Rundschalttisch nach einem der vorhergehenden Ansprüche,
**dadurch gekennzeichnet,**
**dass** sich die Einzelantriebselemente (1, 2) bezogen auf die Drehachse des Tellers (10) jeweils im wesentlichen diametral gegenüber liegen.

4. Rundschalttisch nach einem der vorhergehenden Ansprüche,
**dadurch gekennzeichnet,**
**dass** der Teller (10) entlang seines gesamten Umfangs mit einander benachbarten, einzelnen Permanentmagneten (2) versehen ist.

5. Rundschalttisch nach Anspruch 4,
**dadurch gekennzeichnet,**
**dass** die Basiseinheit (16) mehrere Elektromagneten (1) aufweist, welche den mit dem Teller (10) gekoppelten Permanentmagneten (2) gegenüber liegen.

6. Rundschalttisch nach einem der vorhergehenden Ansprüche,
**dadurch gekennzeichnet,**
**dass** die Einzelantriebselemente (1, 2) von einer Luftkühlung (13, 13') beaufschlagt sind.

7. Rundschalttisch nach Anspruch 6,
**dadurch gekennzeichnet,**
**dass** jeweils ein Luftkühlungselement (13, 13') für eine Hälfte der im Umfangsbereich des Tellers (10) angeordneten Einzelantriebselemente (1, 2) vorgesehen ist.

8. Rundschalttisch nach Anspruch 7,
**dadurch gekennzeichnet,**
**dass** beide Luftkühlungselemente (13, 13') benachbart zueinander und zumindest eine Abluftöffnung (14) bezogen auf die Drehachse des Tellers (10) im Wesentlichen diametral gegenüber angeordnet sind.

9. Rundschalttisch nach einem der vorhergehenden Ansprüche,
**dadurch gekennzeichnet,**
**dass** ein Winkelgeber (3, 4) zur Ermittlung der Relativposition zwischen Teller (10) und Basiseinheit (16) vorgesehen ist.

10. Rundschalttisch nach Anspruch 9,
**dadurch gekennzeichnet,**
**dass** der Teller (10) mit über seinen Umfang verteilten Codierungen (4), insbesondere einschließlich zumindest einer Referenzmarke versehen ist.

11. Rundschalttisch nach einem der Ansprüche 9 oder 10,
**dadurch gekennzeichnet,**
**dass** die Basiseinheit (16) mit einem optischen, magnetischen oder induktiven Sensor (3) zum Erfassen der Codierungen (4) versehen ist.

12. Rundschalttisch nach einem der vorhergehenden Ansprüche,
**dadurch gekennzeichnet,**
**dass** die Basiseinheit (16) eine mit dem Teller (10) zusammenwirkende, insbesondere druckluftbeaufschlagte Bremseinheit (5) aufweist.

13. Rundschalttisch nach Anspruch 12,
**dadurch gekennzeichnet,**
**dass** sich die Bremseinheit (5) bei vorhandener Druckluftbeaufschlagung in ihrem eine Drehung des Tellers (10) ermöglichenden Zustand befindet.

14. Rundschalttisch nach einem der vorhergehenden Ansprüche,
**dadurch gekennzeichnet,**
**dass** Teller (10) und Basiseinheit (16) jeweils ringförmig ausgebildet sind, wobei die zentralen Öffnungen von Teller (10) und Basiseinheit (16) im Wesentlichen miteinander ausgerichtet sind.

15. Rundschalttisch nach einem der vorhergehenden Ansprüche,
**dadurch gekennzeichnet,**
**dass** der Teller (10) über ein Draht-Vierpunkt-Lager (8) drehbar auf der Basiseinheit (16) gelagert ist.
